## Europäisches Patentamt

## European Patent Office

## Office européen des brevets

(19)

(11) Veröffentlichungsnummer: **0 201 861**
**B1**

(12) **EUROPÄISCHE PATENTSCHRIFT**

(45) Veröffentlichungstag der Patentschrift: **05.12.90**

(51) Int. Cl.⁵: **G 01 L 1/24**

(21) Anmeldenummer: **86106240.4**

(22) Anmeldetag: **07.05.86**

(54) **Verfahren und Vorrichtung zur optischen Spannungsmessung.**

(30) Priorität: **08.05.85 DE 3516538**

(43) Veröffentlichungstag der Anmeldung:
**20.11.86 Patentblatt 86/47**

(45) Bekanntmachung des Hinweises auf die
Patenterteilung:
**05.12.90 Patentblatt 90/49**

(84) Benannte Vertragsstaaten:
**DE FR GB IT SE**

(56) Entgegenhaltungen:
**DE-A-2 242 201**
**DE-A-2 314 712**
**DE-A-3 215 879**
**FR-A-2 094 482**
**FR-A-2 491 212**

(73) Patentinhaber: **Firma Carl Zeiss**
**D-7920 Heidenheim (Brenz) (DE)**
(84) **DE FR IT SE**

(73) Patentinhaber: **CARL-ZEISS-STIFTUNG trading**
**as CARL ZEISS**
**D-7920 Heidenheim (Brenz) (DE)**
(84) **GB**

(72) Erfinder: **Mächler, Meinrad**
**Sulzgasse 2**
**D-7090 Ellwangen (DE)**
Erfinder: **Schlemmer, Harry, Dr. rer. nat.**
**Albrecht-Erhardt-Strasse 17**
**D-7080 Aalen (DE)**
Erfinder: **Rager, Ursula**
**Fichtestrasse 63**
**D-7080 Aalen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren und eine Vorrichtung zur optischen Spannungsmessung mit Hilfe einer auf das Objekt aufgebrachten transparenten Schicht, auf welche optische Strahlung gerichtet wird, deren reflektierter Anteil untersucht wird.

Optische Spannungsmessungen bzw. Dehnungsmessungen mit optischen Hilfsmitteln sind seit langer Zeit in verschiedenen Ausführungsformen bekannt (siehe z.B. H. Wolf, Spannungsoptik, 2. Auflage, Berlin 1976 oder ABC der Optik, Hanau 1960). Derartige Untersuchungen werden überwiegend an Modellen aus geeigneten, optisch transparenten Materialien durchgeführt. Dabei können zwei verschiedene Effekte ausgenutzt werden, von denen nur der erste große praktische Bedeutung erlangt hat.

1. Je nach der Größe der mechanischen Spannungen an den verschiedenen Stellen des Modelles werden die optischen Weglängen unterschiedlich verändert. Die dadurch auftretenden Gangunterschiede bei der Durchstrahlung des Modelles können in einer interferometrischen oder polarisationsoptischen Anordnung sichtbar gemacht werden. Eine meßtechnische Auswertung ist dabei nur bei einwandfrei planen Modellen möglich.

2. Viele transparente Stoffe, die normalerweise isotrop sind, zeigen bei elastischer Verformung Doppelbrechung, d.h. die Brechzahl ändert sich in verschiedenen Richtungen unterschiedlich. Die Differenzen sind bei den meisten Stoffen klein, so daß sie im allgemeinen für die unter 1. genannte Methode vernachlässigt werden.

Im Gegensatz zu diesen Methoden, welche an Modellen ausgeführt werden, ist aus der Patentanmeldung EP—0 023 577 ein Apparat zur direkten optischen Messung der Spannungen von Glasuren und transparenten Plastikteilen bekannt. Dabei werden die Brechzahlen der Glasur nach der Methode des Grenzwinkels der Totalreflektion gemessen und die Brechzahldifferenz infolge der Spannungsdoppelbrechung wird durch Messungen mit unterschiedlich polarisiertem Licht ermittelt. Diese Brechzahldifferenz ist für eine Glasur bestimmter Zusammensetzung direkt proportional der mechanischen Spannung in der Glasur.

Nachteilig bei dieser Meßmethode ist, daß für jede Messung ein Meß- und ein Beleuchtungsprisma auf die Glasur aufgesetzt und in optischen Kontakt gebracht werden muß. Außerdem muß die Glasur im Inneren der Schicht ein geeignetes Streuvermögen haben. Ferner ist die Methode natürlich nur für Objekte geeignet, die transparent sind und aus einem Material bestehen, das sich für derartige Messungen eignet. In vielen Gebieten der Technik sind jedoch Spannungen an der Oberfläche von Objekten von Bedeutung, die nicht transparent sind und die nicht oder nur mit viel Aufwand in Form von Modellen nachgebildet werden können. Beispiele sind Karrosseriebleche in der Automobilindustrie und der Tragwerk- und Zellenbau in der Flugzeugindustrie.

Aus einer Veröffentlichung von P. Blüml u.M. (Optische Verfahren in der experimentellen Spannungsanalyse, VDI-Berichte Nr. 439, 1982) ist ferner ein spannungsoptisches Oberflächenschicht-Verfahren bekannt, bei dem auf die Oberfläche des zu untersuchenden Objektes eine transparente Schicht mit einer Dicke von 1,2 bis 3,2 mm aufgeklebt wird. Nach der Verformung bzw. während der Beanspruchung des Objektes wird diese Schicht mit einem Reflexionspolariskop beobachtet oder photographiert, wobei die Auswertung entsprechend dem oben unter 1. Gesagten erfolgt. Der Nachteil dieses Verfahrens liegt hauptsächlich darin, daß die Randzonen ·der Schicht für die Auswertung ungeeignet sind, daß die Ergebnisse durch Spannungsgradienten in Richtung der Schichtdicke verfälscht werden und daß dünne Objekte in ihrem Spannungsverhalten durch die relativ dicke Schicht beeinflußt werden.

Der vorliegenden Erfindung liegt daher die Aufgabe zugrunde, ein Verfahren anzugeben, mit dem auch an lichtundurchlässigen Objekten eine optische Spannungsmessung durchgeführt werden kann, ohne daß von dem zu untersuchenden Objekt ein Modell aus transparentem Material angefertigt werden muß und ohne daß durch das Verfahren eine Beeinflussung der Meßergebnisse (wie beim bekannten Oberflächenschicht-Verfahren) eintritt. Der Erfindung liegt ferner die Aufgabe zugrunde, für ein derartiges Verfahren eine geeignete Meßvorrichtung anzugeben.

Die gestellte Aufgabe wird mit Hilfe einer auf das Objekt aufgebrachten transparenten Schicht, die in Reflexion gemessen wird, erfindungsgemäß dadurch gelöst, daß der durch Interferenz der an den Grenzflächen der transparenten Schicht reflektierten und überlagerten Teillichtbündel entstehende wellenlängenabhängige Intensitätsverlauf gemessen und ausgewertet wird.

Zur Durchführung des Verfahrens ist einerseits eine Vorrichtung vorgesehen, bei der die Strahlung z.B. eines abstimmbaren Lasers auf die transparente Schicht gerichtet wird und bei der durch einen Empfänger die durch Interferenz der an den Grenzflächen der transparenten Schicht reflektierten und überlagerten Teillichtbündel entstehende Intensität gemessen wird. Anstelle des abstimmbaren Lasers kann z.B. auch ein Kontinuumstrahler mit einem Monochromator oder einem Filter mit kontinuierlich einstellbarer Durchlaßwellenlänge verwendet werden.

Zur Durchführung des Verfahrens ist andererseits eine Vorrichtung vorgesehen, bei der die Strahlung eines Kontinuumstrahlers auf die transparente Schicht gerichtet wird und bei der durch ein Spektrometer der durch Interferenz der an den Grenzflächen der transparenten Schicht reflektierten und überlagerten Teillichtbündel entstehende wellenlängenabhängige Intensitätsverlauf gemessen wird.

In einer besonders vorteilhaften Ausführungsform wird der wellenlängenabhängige Intensitätsverlauf mit einem Diodenzeilen-Spektrometer gemessen.

Ein gut auswertbarer wellenlängenabhängiger Intensitätsverlauf durch Interferenz tritt bei einer Dicke der transparenten Schicht von weniger als 50 μm ein. In einer derart dünnen Schicht können sich keine Spannungsgradienten in Richtung der Schichtdicke ausbilden. Außerdem werden durch eine derart dünne Schicht die Spannungsverhältnisse selbst von dünnen Objekten, wie z.B. Blechen, (praktisch) nicht beeinflußt, da die untere Grenze für einen noch auswertbaren wellenlängenabhängigen Intensitätsverlauf durch Interferenz bei ca. 1 μm liegt.

Weitere vorteilhafte Ausgestaltungen der Erfindung gehen aus den Unteransprüchen hervor.

Ein mit der Erfindung erreichter zusätzlicher Vorteil besteht darin, daß die Messung an sehr kleinen Probenarealen von <1 mm² möglich ist.

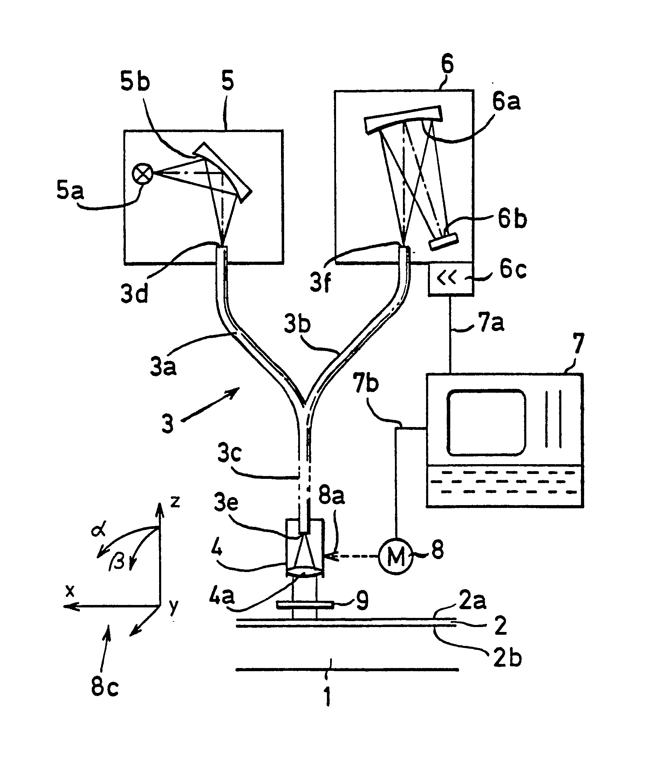

Die Erfindung wird im folgenden anhand eines in der einzigen Figur dargestellten Ausführungsbeispieles näher erläutert.

In der Figur ist mit 1 das Objekt bezeichnet, von dem die mechanischen Spannungen, die an seiner Oberfläche durch Verformung oder Beanspruchung entstanden sind, meßtechnisch erfaßt werden sollen. Hierzu ist vor der Verformung oder Beanspruchung auf die Oberfläche des Objektes 1 eine dünne transparente Schicht 2 aufgebracht worden, welche auf der Oberfläche gut haftet. Dafür eignet sich z.B. der Metallschutzlack Z 186 der Fa. Manciewicz, Hamburg. Derartige Lacke können z.B. aufgespritzt und durch Eintauchen und Abtropfenlassen aufgebracht werden.

Obwohl die Dicke der Schicht 2 nicht unmittelbar in die Messung eingeht, sollte sie zweckmäßigerweise für eine gute Ausführbarkeit des im folgenden beschriebenen Meßverfahrens möglichst gleichmäßig sein und im Bereich zwischen 3 und 20 μm liegen. Eine derartige dünne Schicht 2 beeinflußt das Verhalten des Objektes 1 während der Verformung oder Beanspruchung auch dann nicht, wenn es sich z.B. um ein dünnes Blech handelt. Wichtig ist, daß die Schicht 2 auf dem Objekt 1 gut haftet, damit die Spannungen an der Oberfläche des Objektes 1 auf die transparente Schicht 2 übertragen werden.

Zur Messung der Spannungen in der Schicht 2 wird der wellenlängenabhängige Intensitätsverlauf gemessen, der durch Interferenz der an den Grenzflächen 2a und 2b der transparenten Schicht 2 reflektierten Teillichtbündel entsteht. Dazu wird im Ausführungsbeispiel die Strahlung des Kontinuumstrahlers 5a, z.B. einer Xenon-Hochdrucklampe, auf die Schicht gerichtet. Für eine möglichst einfache Handhabung der Meßeinrichtung erfolgt die Zuleitung der Strahlung zur Schicht 2 und die Ableitung der reflektierten Strahlung von der Schicht 2 über einen Y-förmigen Lichtleiter 3. Der Zweig 3a dieses Lichtleiters ist mit der Beleuchtungseinrichtung 5 verbunden, in der die strahlende Fläche des Kontinuumstrahlers 5a über einen elliptischen Hohlspiegel 5b auf die Anfangsfläche 3d des Lichtleiters 3 abgebildet wird.

Es ist zweckmäßig, die Zweige 3a und 3b des Y-förmigen Lichtleiters aus mehreren Lichtleitfasern zusammenzusetzen, die im Stamm 3c gemeinsam nebeneinander angeordnet sind. Die zum Zweig 3b gehörenden Lichtleitfasern nehmen das von den Grenzflächen 2a und 2b der transparenten Schicht 2 reflektierte Licht auf und führen es dem Spektrometer 6 zu. Das gemeinsame Ende 3e aller Lichtleitfasern sitzt in einem Meßkopf 4, der eine Konvexlinse 4a enthält, welche in einem Abstand vom ein- bis zweifachen ihrer Brennweite vom Ende 3e der Lichtleitfasern angeordnet ist. Den günstigsten Abstand des Meßkopfes 4 von der transparenten Schicht 2 kann man leicht durch Probieren feststellen, worauf später noch eingegangen wird.

Am Ende 3e des Stammes vom Y-förmigen Lichtleiter können die zu den beiden Zweigen 3a und 3b gehörenden Lichtleitfasern regelmäßig oder statistisch zueinander angeordnet sein. Es ist aber auch möglich, die zum Zweig 3a gehörenden Lichtleitfasern in einem inneren Kreis anzuordnen, der von einem Kreisring aus den zum Zweig 3b gehörenden Lichtleitfasern umgeben ist.

Am Ende 3f des Zweiges 3b sind die Lichtleitfasern zweckmäßigerweise in Form eines Spaltes angeordnet, so daß ihre Endflächen den sonst bei Spektrometern üblichen Eintrittsspalt ersetzen. Daher besteht das Spektrometer 6 lediglich aus dem Konkavgitter 6a und der Diodenzeile 6b, welche mit der Elektronikeinheit 6c verbunden ist. Durch die Elektronikeinheit 6c werden die Signale der Diodenzeile 6b vorverarbeitet und über die Leitung 7a an den Rechner 7 gegeben. Auf die Auswertung im Rechner 7 wird weiter unten eingegangen.

Es ist vorteilhaft, das Spektrometer 6 so zu dimensionieren, daß es ein Öffnungsverhältnis hat, welches die Apertur des Zweiges 3b vom Lichtleiter 3 ohne Beschnitt aufnimmt. Das ist, wie aus der DE—OS—32 15 879 bekannt, mit einem holographisch erzeugten Konkavgitter möglich.

Der Y-förmige Lichtleiter 3 kann an seinen Enden so ausgebildet sein, daß diese durch einfach zu handhabende Steckverbindungen mit der Beleuchtungseinrichtung 5 und dem Spektrometer 6 verbunden werden können, wobei auch eine genau definierte Lage der Lichtleitfaserenden möglich ist. Beispiele für derartige Verbindungsteile sind ebenfalls in der DE—OS—32 15 879 beschrieben.

Oft sind die am Objekt 1 auftretenden Spannungen nicht nur an einigen Stellen sondern auf der gesamten Oberfläche von Interesse. In diesen Fällen ist eine automatische Positionierung des Meßkopfes für eine z.B. mäanderförmige Abtastung vorteilhaft. Hierfür kann der Meßkopf 4 in eine bekannte mechanische Abtastvorrichtung eingesetzt werden, welche in der Figur durch den Motor 8 und die Verbindung 8a zum Meßkopf chematisch angedeutet ist. Es ist dabei zweckmäßig, den Meßkopf—wie mit der mit 8c bezeichneten Darstellung angedeutet—nicht nur in den zwei Richtungen x und y bewegen zu können, sondern ihn zusätzlich auch noch für nicht ebene Objekte in der z-Richtung bewegen und um die aufeinander senkrecht stehenden Winkel α und β kippen zu können. Alle Bewegungen und Kippungen werden über die Verbindung 7b vom Rechner 7 durch entsprechende Programme gesteuert, wobei mindestens die Bewegung in z-Richtung und die Kippungen um α und β aufgrund ausgewerteter Messungen erfolgen, worauf weiter unten noch näher eingegangen wird.

Die Auswertung des vom Spektrometer 6 aufgenommenen wellenlängenabhängigen Intensitätsverlaufes kann in verschiedenen Weisen erfolgen, von denen im folgenden eine Methode, bei der direkt die Brechzahlen ermittelt werden, ausführlich dargestellt wird.

Nachdem die transparente Schicht 2 auf das Objekt 1 aufgebracht worden ist, wird vor einer Belastung bzw. Verformung zunächst mit der in der Figur dargestellten Meßeinrichtung die genaue Schichtdicke, bzw. ihre Abhängigkeit von den Koordinaten der Oberfläche aus dem gemessenen wellenlängenabhängigen Intensitätsverlauf ermittelt. Dazu muß die Brechzahl, bzw. der Brechzahlverlauf als Funktion der Wellenlänge, der nicht beanspruchten transparenten Schicht 2 bekannt sein. Diese kann für die verwendete Substanz bei gleichen Verarbeitungsbedingungen einmal mit bekannten Methoden, z.B. mit einem Abbe-Refraktometer, bestimmt werden. Wenn n bzw. n (λ) bekannt ist, kann die Schichtdicke aus den im wellenlängenabhängigen Intensitätsverlauf auftretenden Maxima und Minima noch folgender Gleichung berechnet werden:

$$d=\frac{\lambda_a \cdot \lambda_e \cdot P}{2|n(\lambda_e)\lambda_a - n(\lambda_a)\lambda_e|}$$

Dabei sind $\lambda_a$ und $\lambda_e$ Wellenlängen, bei denen infolge von Interferenz in dem gemessenen Intensitätsverlauf Maxima oder Minima auftreten, und P ist die Anzahl der Perioden zwischen diesen Extrema (P=1 für den Abstand von einem Maximum bis zum nächsten). Eine große Genauigkeit erhält man, wenn die Zahl der Perioden groß ist; es ist daher zweckmäßig in einem Wellenlängenbereich zu messen, in dem die Brechzahl sich wenig bis gar nicht ändert. (Für die oben angegebene Substanz ist das im Bereich von 600 bis 1000 nm der Fall).

Für die Änderung der Brechzahl als Funktion der in der transparenten Schicht vorhandenen Spannungen werden für die verwendete Substanz bei gleichen Verarbeitungsbedingungen zunächst Eichkurven aufgenommen.

Dabei werden an einem geeigneten Objekt Spannungen erzeugt, die sich entweder aus der Geometrie, den Materialdaten und den wirksamen Kräften errechnen oder mit anderen Methoden, wie z.B. Dehnungsmeßstreifen, messen lassen. Da hierbei in der transparenten Schicht 2 Doppelbrechung auftritt, wird zwischen ihr und dem Meßkopf 4 ein Polarisator 9 angeordnet, der von Hand oder von einem (nicht gezeichneten) vom Rechner 7 gesteuerten Motor gedreht wird. Bei der Eichung ist die Richtung der erzeugten Spannung bekannt, so daß der Polarisator nur in diese Richtung gedreht werden muß. Anschließend wird ein größerer Bereich des wellenlängenabhängigen Intensitätsverlaufes aufgenommen und aus diesem die Brechzahl $n_{II}$ nach folgender Gleichung ermittelt:

$$n_{ij}=\frac{\lambda_i \lambda_j P}{2d|\lambda_i - \lambda_j|}$$

Dabei ist $n_{ij}$ die mittlere Brechzahl für das Wellenlängenintervall von $\lambda_i$ bis $\lambda_j$ wobei $\lambda_i$ und $\lambda_j$ Wellenlängen sind, bei denen ein Maximum oder Minimum vorliegt; P ist wieder die Anzahl der Perioden zwischen diesen Extrema. Für die oben angegebene Substanz ist auch $n_{II}$ im Wellenlängenbereich von 600 bis 1000 nm praktisch konstant, so daß eine sehr genaue Bestimmung von $n_I$ .572 möglich ist.

Durch Drehung des Polarisators um 90° könnte man auf die gleiche Weise $n_\perp$ und damit Δn ermitteln, was jedoch für die dargestellte Methode keine praktische Bedeutung hat. Das gleiche Vorgehen wird für verschiedene Spannungen mit bekannten Werten angewendet, so daß man eine Eichkurve für $n_{II}$ als Funktion der Spannung σ erhält. Diese Eichkurve ist, unter der Voraussetzung, daß nicht zu große Spannungen angewendet werden, praktisch eine Gerade.

Die Durchführung der Messungen an dem zu untersuchenden Objekt mit unbekannten Spannungen erfolgt in ganz entsprechender Weise. Da in diesem Fall die Richtung der Spannung nicht bekannt ist, wird der Polarisator so gedreht, daß ein beliebiger Extremwert des wellenlängenabhängigen Intensitätsverlaufes zu einer möglichst niedrigen Wellenlänge geschoben wird. Die Schwingungsrichtung des Polarisators liegt dann in der Richtung der Zugspannung. Die Drehung des Polarisators kann vom Rechner 7 gesteuert automatisch erfolgen. Selbstverständlich ist es auch möglich, die Eichkurven im Rechner zu speichern, so daß alle Rechen- und Auswertevorgänge im Rechner durchgeführt werden.

Für die Ermittlung der Spannungen auf der gesamten Oberfläche eines nicht ebenen Objektes ist es notwendig, den Meßkopf 4 auch um die Winkel α und β zu kippen und in z-Richtung zu bewegen. Die Einstellung der Winkel α und β erfolgt dabei so, daß die Fläche unter dem wellenlängenabhängigen Intensitätsverlauf möglichst groß wird. Die Einstellung des Abstandes des Meßkopfes 4 von der transparenten Schicht 2 erfolgt so, daß der Unterschied zwischen den Maxima und den Minima des wellenlängenabhängigen Intensitätsverlaufes möglichst groß wird. Auch diese Einstellungen werden zweckmäßigerweise vom Rechner durchgeführt.

Bei der beschriebenen Auswertemethode ist die in der transparenten Schicht beim Vorliegen von Spannungen auftretende Doppelbrechung ein Störfaktor, welcher die Verwendung eines Polarisators notwendig macht. Die auftretende Doppelbrechung läßt sich jedoch auch direkt auswerten. Wenn zwischen Meßkopf 4 und transparenter Schicht kein Polarisator angeordnet wird, dann treten bei der gedehnten transparenten Schicht bei dem wellenlängenabhängigen Intensitätsverlauf der reflektierten Strahlung nicht nur Maxima und Minima auf, sondern infolge der Doppelbrechung tritt zusätzlich eine Schwebung (mit größerer Periode als bei den Extremwerten) auf. Durch eine Fourier-Transformation dieses wellenlängenabhängigen Intensitätsverlaufes im Rechner 7 kann man in bekannter Weise eine Frequenzanalyse durchführen, deren Ergebnis der Unterschied der Brechzahlen $\Delta n$ infolge der Doppelbrechung ist. Zwischen diesem $\Delta n$ und der Zugspannung $\sigma$ besteht ein eindeutiger Zusammenhang, der entsprechend den obigen Ausführungen durch eine Eichung ermittelt werden kann. Die Richtungen der Spannungen erhält man in diesem Fall durch die Ermittlung des Gradientenverlaufes zwischen den rasterförmig aufgenommenen Werten für $\Delta n$.

## Patentansprüche

1. Verfahre. optischen Spannungsmessung mit Hilfe eine. uf das Objekt (1) aufgebrachten transparenten Schicht (2), auf welche optische Strahlung gerichtet wird, deren reflektierter Anteil untersucht wird, dadurch gekennzeichnet, daß der durch Interferenz der an den Grenzflächen (2a, 2b) der transparenten Schicht (2) reflektierten und überlagerten Teillichtbündel entstehende wellenlängenabhängige Intensitätsverlauf gemessen und ausgewertet wird.

2. Vorrichtung zur Durchführung des Verfahrens nach Anspruch 1, gekennzeichnet durch Mittel zur Erzeugung einer auf die transparente Schicht (2) gerichteten Strahlung mit kontinuierlich einstellbarer Wellenlänge und durch Mittel zur Messung der durch Interferenz an den Grenzflächen (2a, 2b) der transparenten Schicht (2) reflektierten und überlagerten Teillichtbündel entstehenden Intensität.

3. Vorrichtung zur Durchführung des Verfahrens nach Anspruch 1, gekennzeichnet durch Mittel (5) zur Erzeugung einer auf die transparente Schicht (2) gerichteten Strahlung mit einem Wellenlängenkontinuum und durch Mittel (6) zur Messung des durch Interferenz an den Grenzflächen (2a, 2b) der transparenten Schicht (2) reflektierten und überlagerten Teillichtbündel entstehenden wellenlängenabhängigen Intensitätsverlaufes.

4. Vorrichtung nach Anspruch 2 oder Anspruch 3, gekennzeichnet durch einen Y-förmigen Lichtleiter (3) zur Zuleitung der Strahlung zur Schicht (2) und zur Ableitung der reflektierten Strahlung von der Schicht (2), an dessen einem Zweig (3a) eine Einrichtung mit kontinuierlich einstellbarer Wellenlänge oder ein Kontinuumstrahler (5), an dessen anderem Zweig (3b) ein Empfänger oder ein Diodenzeilen-Spektrometer (6) und an dessen Stamm (3c) ein Meßkopf (4) angeschlossen sind.

5. Vorrichtung nach einem der Ansprüche 2 bis 4, dadurch gekennzeichnet, daß die Einrichtung (6) zur Messung der von der Schicht reflektierten Strahlung und falls vorhanden die Einrichtung mit kontinuierlich einstellbarer Wellenlänge an einem Rechner (7) angeschlossen sind.

6. Vorrichtung nach Anspruch 5, dadurch gekennzeichnet, daß der Meßkopf (4) in eine mechanische Abtastvorrichtung eingesetzt ist, welche durch den Rechner (7) gesteuert wird, und daß der Rechner (7) für eine ortsabhängige Messung und Darstellung der mechanischen Spannungen programmiert ist.

7. Vorrichtung nach Anspruch 6, dadurch gekennzeichnet, daß der Meßkopf (4) durch die Abtasteinrichtung in drei Raumkoordinaten (x, y, z) bewegbar und in zwei aufeinander senkrecht stehenden Winkeln (α, β) kippbar ist.

8. Verfahren nach Anspruch 1 oder Vorrichtung nach einem der Ansprüche 2 bis 7, gekennzeichnet durch eine Dicke der transparenten Schicht im Bereich von 3 bis 20 µm.

9. Verfahren nach Anspruch 1 oder Vorrichtung nach einem der Ansprüche 2 bis 8, dadurch gekennzeichnet, daß die transparente Schicht (2) aus handelsüblichem Metallschutzlack besteht und auf das zu untersuchende Objekt (1) durch Spritzen oder Tauchen und Abtropfen aufgebracht ist.

10. Verfahren nach Anspruch 1 oder Vorrichtung nach einem der Ansprüche 2 bis 8, dadurch gekennzeichnet, daß die transparente Schicht (2) eine Folie ist, welche auf das zu untersuchende Objekt (1) aufgeklebt oder aufgeschmolzen ist.

## Revendications

1. Procédé pour la mesure optique de tensions ou contraintes à l'aide d'une couche transparente (2) appliquée sur l'objet (1) et sur laquelle est dirigé un rayonnement optique dont on examine la fraction réfléchie, caractérisé en ce que l'on mesure et on exploite l'allure d'intensité, fonction de la longueur d'onde, produite par interférence des faisceaux lumineux partiels réfléchis aux interfaces (2a, 2b de la couche transparente (2) et superposés.

2. Dispositif pour la mise en oeuvre du procédé selon la revendication 1, caractérisé par des moyens pour générer un rayonnement dirigé sur la couche transparente (2) et dont la longueur d'onde est réglable en continu, ainsi que par des moyens pour mesurer l'intensité produite par interférence des faisceaux lumineux partiels réfléchis aux interfaces (2a, 2b) de la couche transparente (2) et superposés.

3. Dispositif pour la mise en oeuvre du procédé selon la revendication 1, caractérisé par des moyens (5) pour générer un rayonnement dirigé sur la couche transparente (2) à l'aide d'une source à longueurs d'onde continues, ainsi que par des moyens (6) pour mesurer l'allure d'intensité fonction de la longueur d'onde produite par interférence des faisceaux lumineux partiels réfléchis aux interfaces (2a, 2b) de la couche transparente (2) et superposés.

4. Dispositif selon la revendication 2 ou 3, caractérisé par un conducteur de lumière (3) en Y, servant à amener le rayonnement à la couche (2) et à évacuer le rayonnement réfléchi à partir de la couche (2), à une branche (3a) duquel est raccordé un dispositif à longueur d'onde réglable de façon continue, à l'autre branche (3b) duquel est raccordé un récepteur ou un spectromètre (6) à barrette de diodes, et au tronc (3c) duquel est raccordée une tête de mesure (4).

5. Dispositif selon une des revendications 2 à 4, caractérisé en ce que le dispositif (6) pour la mesure du rayonnement réfléchi par la couche et, s'il est présent, le dispositif à longueur d'onde réglable de façon continue, est connecté ou sont connectées à un calculateur (7).

6. Dispositif selon la revendication 5, caractérisé en ce que la tête de mesure (4) est placée dans un dispositif d'exploration mécanique commandé par le calculateur (7), et que le calculateur (7) est programmé pour une mesure et une représentation des tensions mécaniques en fonction du lieu.

7. Dispositif selon la revendication 6, caractérisé en ce que la tête de mesure (4) est déplaçable par le dispositif d'exploration suivant trois coordonnées spatiales x, y, z et peut être basculé par ce dispositif suivant deux angles octogonaux ($\alpha$, $\beta$).

8. Procédé selon une revendication 1 ou dispositif selon une des revendications 2 à 7, caractérisé par une épaisseur de la couche transparente comprise dans la gamme de 3 à 20 µm.

9. Procédé selon la revendication 1 ou dispositif selon une des revendications 2 à 8, caractérisé en ce que la couche transparente (2) est faite d'un vernis protecteur de métaux du commerce et est appliquée sur l'objet (1) à examiner par projection ou immersion et égouttage.

10. Procédé selon la revendication 1 ou dispositif selon une des revendications 2 à 8, caractérisé en ce que la couche transparente (2) est une feuille collée ou que l'on a fait fondre sur l'objet (1) à examiner.

**Claims**

1. A method for optical strain measurement using a transparent layer (2) deposited on the object (1), on which optical radiation is directed whose reflecting portion is examined, characterized by the fact that the wavelength-dependent intensity course caused by interference of the partial light bundles reflected on the boundary surfaces (2a, 2b) of the transparent layer (2) and superposed is measured and evaluated.

2. An apparatus for executing the method according to claim 1, characterized by means for generating radiation of continuously adjustable wavelength which is directed on the transparent layer (2), and by means for measuring the intensity caused by interference of the partial light bundles reflected on the boundary surfaces (2a, 2b) of the transparent layer (2) and superposed.

3. An apparatus for executing the method according to claim 1, characterized by means (5) for generating radiation of a continuous wavelength spectrum directed on a transparent layer (2), and by means for measuring the intensity course caused by interference of the partial light bundles reflected on the boundary surfaces (2a, 2b) of the transparent layer (2) and superposed.

4. An apparatus according to claims 2 or 3, characterized by a Y-shaped light guide (3) for supplying the radiation to the layer (2) and for dissipating the reflected radiation from the layer (2), one branch (3a) of which is connected to a device with continuously adjustable wavelength or a continuous radiation source (5), the other branch (3b) of which is connected to a receiver or a diode array spectrometer (6), and the trunk (3c) of which is connected to a measuring head (4).

5. An apparatus according to claims 2 to 4, characterized by the fact that the device (6) for measuring the radiation reflected by the layer, and, if existing, the device with continuously adjustable wavelength, are connected to a computer (7).

6. An apparatus according to claim 5, characterized by the fact that the measuring head (4) is located in a mechanical scanning device which is controlled by the computer (7), and that the computer (7) is programmed for location-dependent measurement and presentation of mechanical strain.

7. An apparatus according to claim 6, characterized by the fact that the measuring head (4) due to the scanning device is mobile in three spatial coordinates (x, y, z) and tiltable about two mutually perpendicular angles ($\alpha$, $\beta$).

8. A method according to claim 1, or an apparatus according to claims 2 to 7, characterized by a thickness of the transparent layer between 3 and 20 microns.

9. A method according to claim 1, or an apparatus according to claims 2 to 8, characterized by the fact that the transparent layer (2) consists of commercially available metal-protective paint which is deposited on the object to be examined (1) by spraying or dipping and draining.

10. A method according to claim 1, or an apparatus according to claims 2 to 8, characterized by the fact that the transparent layer (2) consists of a foil which is deposited on the object to be examined (1) by means of an adhesive agent or a melting process.